# EUROPÄISCHE PATENTANMELDUNG

(11) **EP 3 263 203 A1**
(43) Veröffentlichungstag der Anmeldung: **03.01.2018**
(21) Anmeldenummer: 16177668.7
(22) Anmeldetag: 01.07.2016
(51) Int. Cl.: B01D 29/68

(54) **RÜCKSPÜLFILTER**

(71) Anmelder: BWT Aktiengesellschaft, 5310 Mondsee (AT)
(72) Erfinder: Johann, Jürgen, 69226 Nussloch (DE); Mairhofer, Anton, 4893 Zell am Moos (AT)
(74) Vertreter: Jell, Friedrich

(57) **Zusammenfassung**

Es wird ein Rückspülfilter (1) mit einem Einlass (2), Auslass (4) und Ablauf (10), mit einem Filter (6), mit einem Gehäuse (7), das vom Filter (6) in eine mit dem Einlass (2) verbundene Einlasskammer (8) und in eine mit dem Auslass (4) verbundene Auslasskammer (9) unterteilt ist, und mit einer Rückspüleinrichtung (12) gezeigt, die sowohl ein im Gehäuse (7) um den Filter (6) einlassseitig drehbar angeordnetes Absaugelement (13) mit einer Ansaugöffnung (14), welche in Ansaugrichtung (15) auf den Filter (6) zur Filterreinigung gerichtet ist, als auch einen mit der Ansaugöffnung (14) und dem Auslass (4) verbundenen Rückspülkanal (16) und eine Dreheinrichtung (17) aufweist, die bei einer Druckabsenkung im Rückspülkanal (16) die Drehbewegung des Absaugelements (13) um den Filter (6) treibt. Ein handhabungs-und wartungsfreundlicher Rückspülfilter ergibt sich, in dem die Dreheinrichtung (17) bei der Druckabsenkung im Rückspülkanal (16) die Drehbewegung des Absaugelements (13) durch die, gegen die Radiale (19) des Absaugelements (13) geneigte Ansaugrichtung (15) der Ansaugöffnung (14) treibt.

## Beschreibung

Die Erfindung betrifft einen Rückspülfilter mit einem Einlass, Auslass und Ablauf, mit einem Filter, mit einem Gehäuse, das vom Filter in eine mit dem Einlass verbundene Einlasskammer und in eine mit dem Auslass verbundene Auslasskammer unterteilt ist, und mit einer Rückspüleinrichtung, die ein im Gehäuse um den Filter einlassseitig drehbar angeordnetes Absaugelement mit einer Ansaugöffnung, die in Ansaugrichtung auf den Filter zur Filterreinigung gerichtet ist, eine mit der Ansaugöffnung und dem Auslass verbundenen Rückspülkanal und eine Dreheinrichtung aufweist, die bei einer Druckabsenkung im Rückspülkanal die Drehbewegung des Absaugelements um den Filter treibt.

Um die Reinigung einer Filterkerze eines Rückspülfilters beim Rückspülen des Rückspülfilters zu erleichtern, ist es aus dem Stand der Technik bekannt (DE4343180A1), beim Rückspülen eine Druckabsenkung im Rückspülkanal zu nutzen, um ein Absaugelement mit einer Ansaugöffnung um die Filterkerze zu drehen und damit Schmutzpartikel von der Filteroberfläche abzusaugen. Konstruktiv gelöst wird dies mit einer Dreheinrichtung, die - ähnlich zu einem Spindelhubgetriebe - das Absaugelement mit einem im Rückspülkanal vorgesehenen Kolben und einer mit dem Kolben mechanisch gekoppelten Antriebsspindel drehend antreibt. Nachteilig ist dabei, dass die Drehbewegung durch den maximalen Hub des Kolbens des Absaugelements begrenzt ist - was die Reinigungswirkung des Absaugelements, insbesondere gegenüber vergleichsweise fest an der Filterkerze haftenden Schmutzpartikeln, eingeschränkt. Daher kann trotz Rückspülfunktion am Rückspülfilter eine standfeste Reinigung der Filterkerze nicht sichergestellt werden - was nachteilig eines erhöhten Wartungsaufwands am Rückspülfilter in Bezug auf dessen Filterkerze bedarf.

Es ist daher die Aufgabe der Erfindung, einen Rückspülfilter der eingangs geschilderten Art derart konstruktiv zu verändern, dass beim Rückspülen stets für eine ausreichende Reinigung des Filters von Schmutzpartikel gesorgt werden kann. Zudem soll der Rückspülfilter handhabungs- und wartungsfreundlich sein.

Die Erfindung löst die gestellte Aufgabe dadurch, dass die Dreheinrichtung bei der Druckabsenkung im Rückspülkanal durch die gegen die Radiale des Absaugelements geneigte Ansaugrichtung der Ansaugöffnung die Drehbewegung des Absaugelements treibt.

Treibt die Dreheinrichtung bei Druckabsenkung im Rückspülkanal durch die gegen die Radiale des Absaugelements geneigte Ansaugrichtung der Ansaugöffnung die Drehbewegung des Absaugelements, kann im Gegensatz zum Stand der Technik über die gesamte Dauer der Druckabsenkung bzw. der Rückspülung die Filterabsaugung des Absaugelements aufrecht erhalten werden. Der Unterdruck im Rückspülkanal erzeugt nämlich durch die erfindungsgemäß gerichtete Ansaugrichtung am Absaugelement eine Reaktionskraft, welche auf die Drehstellung des Absaugelements wirkt - und so für eine Drehung des Ansaugelements um den Filter sorgt. Damit kann eine gegenüber dem Stand der Technik verbesserte Reinigung des Filters von Schmutzpartikeln gewährleistet werden. Diese Filterreinigung kann auch entsprechend dem Verschmutzungsgrad vergleichsweise einfach über die Dauer der Rückspülung eingestellt werden, wodurch die Rückspülung und damit auch die Handhabung des Rückspülfilters vergleichsweise einfach gestaltet sein kann. Besonders kann sich aber die Erfindung dadurch gegenüber dem Stand der Technik auszeichnen, dass aufgrund der kontinuierlichen Absaugung des Absaugelements während der gesamten Rückspüldauer, auch hartnäckig anhaftende Schmutzpartikel vom Filter absaugbar sind, wodurch die Filterfunktion am Rückspülfilter gewährleistet bleiben kann. Dies vermindert nicht nur den Wartungsaufwand am Rückspülfilter sondern erhöht im Speziellen auch die Standfestigkeit des erfindungsgemäßen Rückspülfilters.

Ist die Ansaugöffnung schlitzförmig ausgebildet, kann die Filterabsaugung ein größeres Längssegment des Filtermantels erfassen, dennoch aber an der Filteroberfläche für eine ausreichende Strömungsgeschwindigkeit sorgen, um ein besonders gutes und sicheres Ergebnis der Absaugung zu erreichen.

Verläuft die Schlitzlängsachse der Ansaugöffnung zur Längsachse des Absaugelements geneigt, kann das Ergebnis der Absaugung am Filter weiter verbessert werden. Auf diese Weise ist es nämlich möglich, durch die schräg verlaufende Ansaugöffnung jene Schmutzpartikel, die zwar von einem ersten Abschnitt der Ansaugöffnung losgelöst, aber nicht abgesaugt wurden, vom einem diesem ersten Abschnitt nachfolgenden zweiten Abschnitt der Ansaugöffnung abzusaugen. Ein erneutes Festsetzen der Schmutzpartikel am Filtermantel bis zu jenem Zeitpunkt, an dem die nächste Absaugung dieses Filtermantelbereichs stattfindet, kann so verhindert werden. Erfindungsgemäß kann der Filter damit selbst von hartnäckig anhaftenden Schmutzpartikeln gereinigt werden, was einen besonders standfesten Rückspülfilter schafft.

Sind Absaugelement und Filter koaxial zueinander angeordnet, kann - aufgrund vergleichsweise kurzer Rückspülkanallängen - eine vergleichsweise hohe Saugleistung am Absaugelement erreicht und somit das Ergebnis der Absaugung weiter verbessert werden.

Die Konstruktion des Absaugelements kann vereinfacht werden, wenn der Rückspülkanal einen im Absaugelement mittleren Zentralkanal und mindestens einen mit dem mittleren Zentralkanal verbundenen Seitenkanal aufweist, welcher gegen die Radiale des Absaugelements geneigt verläuft und in der Ansaugöffnung endet. Des Weiteren ist durch den mittleren Zentralkanal am Absaugelement vermeidbar, dass die Längsströmung durch das Absaugelement der Reaktionskraft zur Drehung des Absaugelements entgegenwirkt - was selbst bei vergleichsweise geringen Druckunterschieden bei der Rückspülung eine zuverlässige Drehung des Absaugelements gewährleisten kann.

Eine turbulente Ansaugströmung im Seitenkanal des Absaugelements kann vermieden bzw. verringert werden, wenn der Seitenkanal einander gegenüberliegende gekrümmte Leitflächen aufweist, welche an der Ansaugöffnung enden. In Folge dessen kann unter anderem die von der Ansaugströmung auf das Absaugelement wirkende Reaktionskraft erhöht werden, was die treibende Wirkung der Dreheinrichtung weiter verbessert.

Indem sich der Zentralkanal längs in seiner Querschnittsfläche erweitert, kann sich die Möglichkeit eröffnen, die Ansaugleistung über die gesamte Länge der Ansaugöffnung einzustellen, um ein sicheres Absaugergebnis am Filter zu erreichen. Insbesondere ist damit unter anderem eine gleichmäßige Ansaugleistung über die gesamte Länge der Ansaugöffnung einstellbar.

Weist das Absaugelement mindestens eine Schaufel auf, kann es in der Art eines Schaufellaufrads ausgebildet und damit unterstützend auf die Drehung des Absaugelements einwirken. Damit ist es möglich - durch Erhöhung der treibenden Kraft - die Dreheinrichtung weiter zu verbessern und so selbst bei geringen Druckunterschieden im Rückspülkanal zuverlässig eine Reinigung des Filters zu gewährleisten.

Ein erhöhter kombinatorischer Effekt zum Treiben des Absaugelements durch die gerichtete Saugströmung des Absaugelements und durch die Laufradeigenschaften des Absaugelements kann entstehen, wenn die Schaufel an ihrer Schaufelkante die Ansaugöffnung aufweist. Die gerichtete Saugströmung an den Schaufelkanten kann nämlich dort die Drehbewegung bremsende Verwirbelungen vermeiden, welche bei gleichbleibendem Wasserdruck zwischen Einlass und Auslass bei der Umsetzung der kinetischen Energie am Absaugelement entstehen können. Auf Basis des damit verringerten Drehwiderstands am Absaugelement kann die Funktion der Absaugung erheblich zuverlässiger ausgebildet werden - was eine besonders standfeste Reinigung des erfindungsgemäßen Filters gewährleistet.

Die genannte Unterstützung der Drehbewegung aufgrund der Außengeometrie des Absaugelements kann weiter verbessert werden, wenn die Schaufel vorwärts gekrümmt ist.

Variiert die Schaufelkontur der Schaufeln in Längsrichtung des Absaugelements, kann die Laufeigenschaften des Absaugelements weiter verbessert werden.

Die Konstruktion des Rückspülfilters kann zusätzlich vereinfacht werden, wenn das Absaugelement im Rückspülfilter frei drehbar angeordnet ist.

Erfindungsgemäß können Verunreinigungen nicht nur über jene auf den Filter gerichtete Ansaugöffnung in den Rückspülkanal gelangen sondern es kann auch auf den Boden der Einlasskammer eine vergleichsweise hohe Absaugwirkung entfaltet werden. Dies insbesondere am Beginn der Rückspülung. Hierzu ist das Absaugelement im Rückspülfilter axial von einer Filterbetriebslage in eine Rückspüllage verschiebbar gelagert ist und zusätzlich zur Ansaugöffnung mindestens eine mit dem mit Rückspülkanal verbundene Auslassöffnung aufweist, die relativ zum Boden der Einlasskammer derart angeordnet ist, dass einerseits in der Filterbetriebslage die Auslassöffnung zumindest bereichsweise oberhalb des Bodens der Einlasskammer liegt und damit gegenüber der Einlasskammer offen ist und andererseits in der axial zur Filterbetriebslage verschobenen Rückspüllage die Auslassöffnung unterhalb des Bodens der Einlasskammer liegt und damit gegenüber der Einlasskammer verschlossen ist. Eine schnelle und standfeste Reinigung des Filters kann damit gewährleistet werden.

Ist das Absaugelement im Rückspülfilter entgegen einer Rückstellfeder axial verschiebbar gelagert, kann standfest eine Rückstellung des Absaugelements von dessen Rückspüllage in dessen Filterlage gewährleistet werden.

In den Figuren ist beispielsweise der Erfindungsgegenstand anhand einer Ausführungsvariante näher dargestellt. Es zeigen
- Fig. 1: eine geschnittene Seitenansicht auf einen Rückspülfilter im Filterbetrieb
- Fig. 2: eine geschnittene Seitenansicht des nach Fig. 1 dargestellten Rückspülfilters bei der Rückspülung,
- Fig. 3: eine Schnittansicht nach III-III der Fig. 1 und
- Fig. 4: eine Seitenansicht auf das Absaugelements des Rückspülfilters 1.

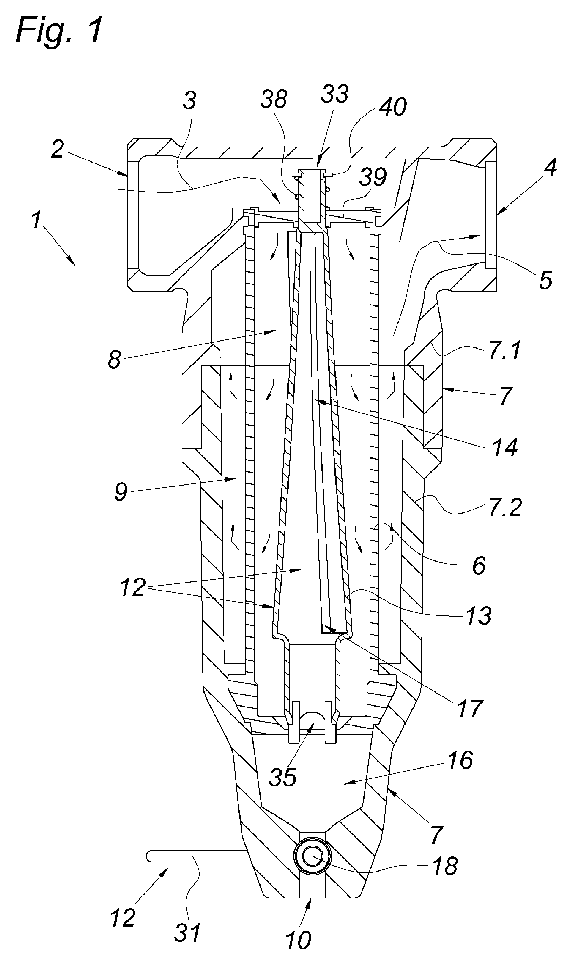

Gemäß dem beispielsweise nach Fig. 1 dargestellten Rückspülfilter 1 ist ein Einlass 2 für die zu filternde Flüssigkeit 3, insbesondere Trinkwasser, und ein Auslass 4 für die gefilterte Flüssigkeit 5 zu erkennen. Zum Zwecke der Filterung der Flüssigkeit 3 ist im Rückspülfilter 1 ein kartuschenförmiger Filter 6 vorgesehen, der das Gehäuse 7 des Rückspülfilters 1 in eine mit dem Einlass 2 verbundene Einlasskammer 8 und in eine mit dem Auslass 4 verbundene Auslasskammer 9 unterteilt. Das Gehäuse 7 des Rückspülfilters 1 wird von einem Oberteil 7.1 und einer vom Oberteil 7.1 lösbaren Filterglocke 7.2 ausgebildet.

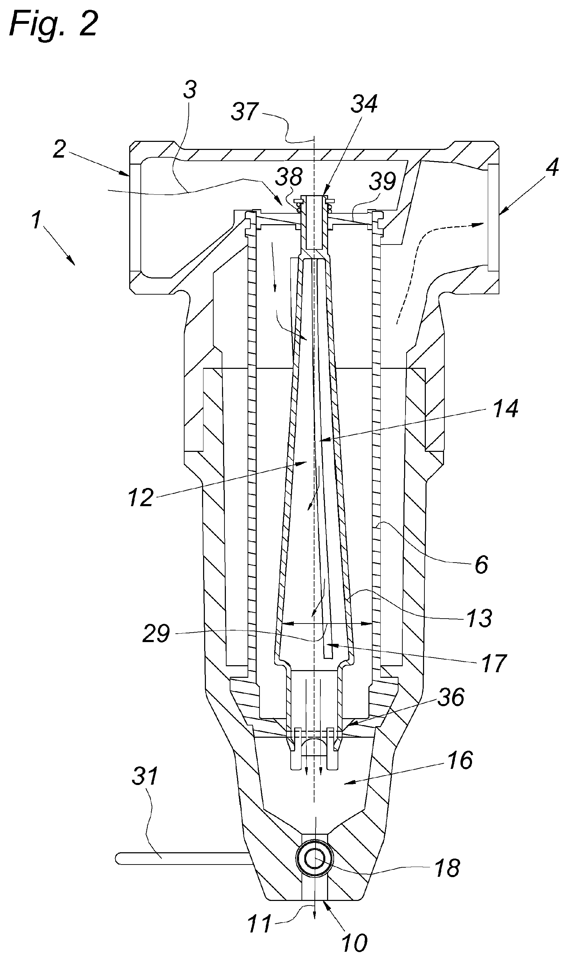

Gemäß Fig. 2 ist zum Rückspülen des Rückspülfilters 1, dieser mit einem Ablauf 10 ausgestattet, über welchen Ablauf 10 die abzuführende Flüssigkeit 11 samt eventuellen Schmutzpartikeln - welche nicht näher dargestellt wurden - abgeführt werden kann. Diese abzuführende Flüssigkeit 11 wird von der Rückspüleinrichtung 12 im Bereich der Einlasskammer 8 entnommen, wofür die Rückspüleinrichtung 12 unter anderem ein Absaugelement 13 in der Einlasskammer 8 aufweist. Dieses Absaugelement 13 ist um den Filter 6, vorzugsweise frei, drehbar und weist mehrere Ansaugöffnungen 14 auf, welche in Ansaugrichtung 15 auf den Filter 6 zur Filterreinigung gerichtet sind. Diese Ansaugöffnungen 14 sind über einen Rückspülkanal 16 der Rückspüleinrichtung 12 mit dem Auslass 10 strömungsverbunden. Der Rückspüleinrichtung 12 ist auch eine Dreheinrichtung 17 zugeordnet, mit welcher das Absaugelement 13 drehend angetrieben werden kann - und zwar indem eine Druckabsenkung im Rückspülkanal 16 genutzt wird, welche Druckabsenkung beim Rückspülen im Rückspülkanal 16 auftritt, wenn über den Betätigungshebel 31 das Rückspülventil 18 geöffnet wird.

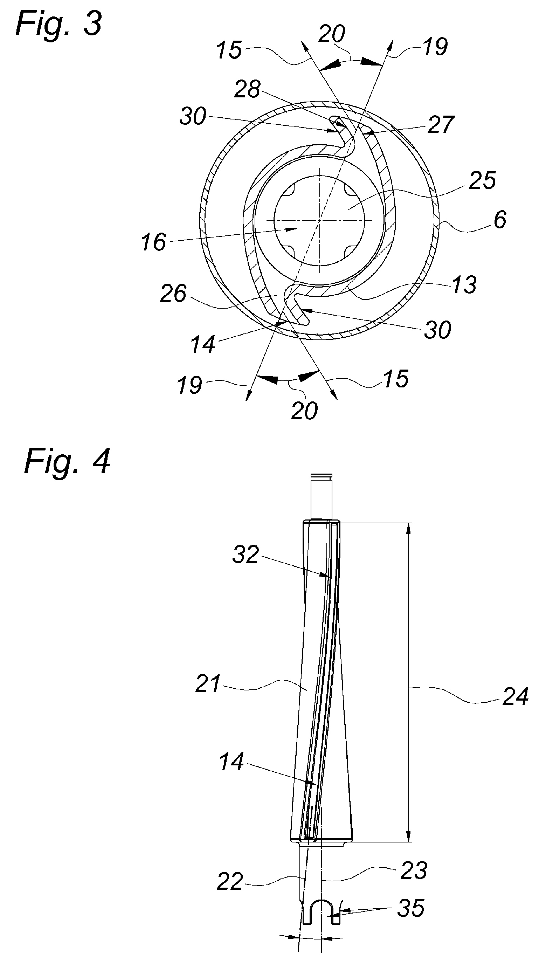

Erfindungsgemäß wird die Drehbewegung des Absaugelements 13 von der Dreheinrichtung 17 dadurch erzeugt, dass die Ansaugrichtungen 15 der Ansaugöffnungen 14 gegen die Radiale 19 des Absaugelements 13 geneigt sind - wie dies in Fig. 3 anhand des Neigungswinkels 20 zwischen der Ansaugrichtungen 15 und der Radialen 19 in der Horizontalen bzw. einer Horizontalebene zu erkennen ist. Durch diese ausgerichteten Ansaugrichtungen 15 kann ein auf das Absaugelements 13 wirkendes Reaktionsmoment erzeugt werden, welches das im Rückspülfilter frei drehbar gelagerte Absaugelement 13 in Drehung versetzt. Die Kraftrichtungen bzw. Ansaugrichtungen 15 der über die Ansaugöffnungen 14 abgeführten Flüssigkeit 11 schneiden nämlich nicht die Lagerachse 37, um die sich das Absaugelements 13 dreht, sondern sind beispielsweise um 50 Grad gegen die Radiale 19 versetzt, wodurch auf das Absaugelement 13 ein Drehmoment wirkt. Im Gegensatz zum Stand der Technik ist es daher nicht erforderlich, ein mechanisches Getriebe zum Antrieb des Absaugelements 13 vorzusehen - welches Getriebe einerseits konstruktiv aufwendig ist und zudem durch seine Lage im Rückspülkanal 16 einer erhöhten Verschmutzungsgefahr unterliegt. Gegenüber dem Stand der Technik sind Wartungsfreundlichkeit und Funktionssicherheit demnach erheblich erhöht.

Wie insbesondere der Fig. 4 zu entnehmen, ist die Ansaugöffnung 14 schlitzförmig ausgebildet und verläuft helixförmig am Mantel 21 des Absaugelements 13. Dadurch ergibt sich ein geneigter Verlauf der Schlitzlängsachse 22 der Ansaugöffnung 14 zur Längsachse 23 des Absaugelements 13 - was die Absaugung am Filter 6 verbessen kann, insbesondere wenn hartnäckig haftende Schmutzpartikel vom Filter 6 abzusaugen sind. Wie zudem in Fig. 4 dargestellt, ist dieser geneigte Verlauf der Schlitzlängsachse 22 über die gesamte Länge 24 der Ansaugöffnung 14.

Für eine konstruktiv einfache Lösung, wird das Absaugelement 13 koaxial im Filter 6 angeordnet - was zudem eine besonders gleichmäßige Reinigung des Filters 6 gewährleisten kann.

Der Rückspülkanal 16 weist im Absaugelement 13 einen mittleren Zentralkanal 25 und mehrere mit dem mittleren Zentralkanal 25 verbundene Seitenkanäle 26 auf. Die Seitenkanäle 26 verlaufen gegen die Radiale 20 des Absaugelements 13 geneigt und enden in der Ansaugöffnung 14. Indem sich diese Seitenkanäle 26 einander gegenüberliegen und gekrümmte Leitflächen 27, 28 aufweisen, welche an der Ansaugöffnung 14 enden, kann ein düsenförmig gerichteter Saugstrahl in Ansaugrichtungen 15 erzeugt werden, was die Triebkraft zur Drehung des Absaugelements 13 zusätzlich steigert.

Der Zentralkanal 25 erweitert sich längs in seiner Querschnittsfläche 29 - und zwar wird dieser in Richtung des Abflusses 10 in seiner Querschnittsfläche 29 größer. Damit wird eine gleichmäßige Absaugung über die gesamte Ansaugöffnung 14 erreicht.

Das Absaugelement 13 weist zudem zwei vorwärts gekrümmte Schaufeln 30 auf um das Absaugelement 14 als Schaufelrad auszubilden, wie dies in der Figur 3 erkannt werden kann. Damit kann das Absaugelement 13 in der Art einer Gleichdruckturbine auch kinetische Energie im Strömungspfad zwischen Einlass 2 und Auslass 4 entnehmen und diese zum Treiben der Drehbewegung des Absaugelements 13 verwenden. Damit kann selbst in Falle einer geringen Entnahme von gefilterter Flüssigkeit 5 (was strichliert in Fig. 2 dargestellt worden ist) am Auslass 4 bzw. damit einer vergleichsweise geringen Druckdifferenz die Drehung des Absaugelements 13 und damit eine funktionstüchtige Absaugung des Filters 6 erhalten bleiben.

Wie in der Fig. 4 zu erkennen, weisen die beiden Schaufeln 30 deren jeweilige Ansaugöffnung 14 an ihrer Schaufelkante 32 auf, was an diesen Stellen bremsende Verwirbelungen vermeiden und damit die Drehung des Absaugelements 13 erleichtert. Zudem variiert die Schaufelkontur der Schaufel 30 in Längsrichtung des Absaugelements.

Zudem ist in einem Vergleich zwischen Fig. 1 und Fig. 2 zu erkennen, dass das Absaugelement 13 im Rückspülfilter 1 axial von einer Filterbetriebslage 33 in eine Rückspüllage 34 verschiebbar gelagert ist, und zwar axial entlang der Lagerachse 37, um der auch das Absaugelement 13 dreht gelagert ist. Da das Absaugelement 13 im Rückspülfilter 1 entgegen einer Federkraft einer Rückstellfeder 38 axial verschiebbar gelagert ist, kann auch nach dem Rückspülen des Rückspülfilters 1 das Absaugelement 13 auf konstruktiv einfache Weise standfest von der Rückspüllage 34 in die Filterbetriebslage 33 zurückbewegt werden. Der Sitz der drückenden Rückstellfeder 38 bildet sich zwischen dem Filterdeckel 39 des Filters 6 und einer im Absaugelement 13 eingesetzten Ringscheibe 40 aus.

Durch diese axiale Verschiebbarkeit können Auslassöffnungen 35 am Absaugelement 13 geöffnet oder verschlossen werden. Diese Auslassöffnungen 35 sind nämlich mit Rückspülkanal 12 verbundene und relativ zum Boden 36 der Einlasskammer 8 derart angeordnet ist, dass einerseits in der Filterbetriebslage 33 diese Auslassöffnung 35 oberhalb des Bodens 36 der Einlasskammer 8 liegt und damit gegenüber der Einlasskammer 8 offen ist und andererseits in der axial zur Filterbetriebslage 33 verschobenen Rückspüllage 12 die Auslassöffnung 35 unterhalb des Bodens 36 der Einlasskammer 8 liegt und damit gegenüber der Einlasskammer 8 verschlossen ist. Damit können zu Beginn der Rückspülung bereits Verunreinigungen in einen unterhalb der Einlasskammer 8 liegenden Druckraum 27 abgeführt werden, und damit die Ansaugöffnungen 14 vor Verstopfung durch größere Verunreinigungen schützen.

## Patentansprüche

1. Rückspülfilter mit einem Einlass (2), Auslass (4) und Ablauf (10), mit einem Filter (6), mit einem Gehäuse (7), das vom Filter (6) in eine mit dem Einlass (2) verbundene Einlasskammer (8) und in eine mit dem Auslass (4) verbundene Auslasskammer (9) unterteilt ist, und mit einer Rückspüleinrichtung (12), die sowohl ein im Gehäuse (7) um den Filter (6) einlassseitig drehbar angeordnetes Absaugelement (13) mit einer Ansaugöffnung (14), welche in Ansaugrichtung (15) auf den Filter (6) zur Filterreinigung gerichtet ist, als auch einen mit der Ansaugöffnung (14) und dem Auslass (4) verbundenen Rückspülkanal (16) und eine Dreheinrichtung (17) aufweist, die bei einer Druckabsenkung im Rückspülkanal (16) die Drehbewegung des Absaugelements (13) um den Filter (6) treibt, **dadurch gekennzeichnet, dass** die Dreheinrichtung (17) bei der Druckabsenkung im Rückspülkanal (16) die Drehbewegung des Absaugelements (13) durch die, gegen die Radiale (19) des Absaugelements (13) geneigte Ansaugrichtung (15) der Ansaugöffnung (14) treibt.

2. Rückspülfilter nach Anspruch 1, **dadurch gekennzeichnet, dass** die Ansaugöffnung (14) schlitzförmig ausgebildet ist.

3. Rückspülfilter nach Anspruch 2, **dadurch gekennzeichnet, dass** die Schlitzlängsachse (22) der Ansaugöffnung (14) zur Längsachse (23) des Absaugelements (13) geneigt verläuft.

4. Rückspülfilter nach Anspruch 1, 2 oder 3, **dadurch gekennzeichnet, dass** das Absaugelement (13) und Filter (6) koaxial zueinander angeordnet sind.

5. Rückspülfilter nach einem der Ansprüche 1 bis 4, **dadurch gekennzeichnet, dass** der Rückspülkanal (16) einen mittleren Zentralkanal (25) im Absaugelement (13) und mindestens einen mit dem mittleren Zentralkanal (25) verbundenen Seitenkanal (26) aufweist, welcher gegen die Radiale (19) des Absaugelements (13) geneigt verläuft und in der Ansaugöffnung (14) endet.

6. Rückspülfilter nach Anspruch 5, **dadurch gekennzeichnet, dass** der Seitenkanal (26) einander gegenüberliegende, gekrümmte Leitflächen (27, 28) aufweist, die an der Ansaugöffnung (14) enden.

7. Rückspülfilter nach Anspruch 5 oder 6, **dadurch gekennzeichnet, dass** sich der Zentralkanal (25) in Richtung Ablauf (10) in seinem Querschnittsfläche (29) erweitert.

8. Rückspülfilter nach einem der Ansprüche 1 bis 7, **dadurch gekennzeichnet, dass** das Absaugelement (13) mindestens eine Schaufel (30) aufweist.

9. Rückspülfilter nach Anspruch 8, **dadurch gekennzeichnet, dass** die Schaufel (30) die Ansaugöffnung (14) an ihrer Schaufelkante (32) aufweist.

10. Rückspülfilter nach Anspruch 8 oder 9, **dadurch gekennzeichnet, dass** die Schaufel (30) vorwärts gekrümmt ist.

11. Rückspülfilter nach Anspruch 8, 9 oder 10, **dadurch gekennzeichnet, dass** die Schaufelkontur der Schaufel (30) in Längsrichtung des Absaugelements (13) variiert.

12. Rückspülfilter nach einem der Ansprüche 1 bis 11, **dadurch gekennzeichnet, dass** das Absaugelement (13) im Rückspülfilter (1) frei drehbar angeordnet ist.

13. Rückspülfilter nach einem der Ansprüche 1 bis 12, **dadurch gekennzeichnet, dass** das Absaugelement (13) im Rückspülfilter (1) axial von einer Filterbetriebslage (33) in eine Rückspüllage (34) verschiebbar gelagert ist und zusätzlich zur Ansaugöffnung (14) mindestens eine mit dem mit Rückspülkanal (16) verbundene Auslassöffnung (35) aufweist, die relativ zum Boden (36) der Einlasskammer (8) derart angeordnet ist, dass einerseits in der Filterbetriebslage (33) die Auslassöffnung (35) zumindest bereichsweise oberhalb des Bodens (36) der Einlasskammer (8) liegt und damit gegenüber der Einlasskammer (8) offen ist und andererseits in der axial zur Filterbetriebslage (33) verschobenen Rückspüllage (34) die Auslassöffnung (35) unterhalb des Bodens (36) der Einlasskammer (8) liegt und damit gegenüber der Einlasskammer (8) verschlossen ist.

14. Rückspülfilter nach Anspruch 13, **dadurch gekennzeichnet, dass** das Absaugelement (13) im Rückspülfilter (1) entgegen einer Rückstellfeder (38) axial verschiebbar gelagert ist.
